# EUROPÄISCHE PATENTSCHRIFT

(11) **EP 0 791 396 B1**
(45) Veröffentlichungstag und Bekanntmachung des Hinweises auf die Patenterteilung: **19.09.2001**
(21) Anmeldenummer: 97102552.3
(22) Anmeldetag: 18.02.1997
(51) Int. Cl.: B03B 5/32

(54) **Effektive Kunststoffsortierung**
Effective sorting of plastics
Séparation efficace de matières plastiques

(30) Priorität: 21.02.1996 DE 19606415
(43) Veröffentlichungstag der Anmeldung: 27.08.1997
(73) Patentinhaber: Baker Hughes (Deutschland) GmbH, 29221 Celle (DE)
(72) Erfinder: Neureither, Jochen, 69121 Heidelberg (DE); Unkelbach, Karl-Heinz, Dr., 50996 Köln (DE)
(74) Vertreter: Christl, Hermann, Dipl.-Ing.

(56) Entgegenhaltungen:
- WO-A-92/22380
- DE-A- 2 539 960
- DE-A- 2 900 666
- DE-A- 4 208 104

## Beschreibung

Die Erfindung ist auf ein Verfahren und eine Vorrichtung zur naßmechanischen Trennung von Festoffen unterschiedlicher Dichte aus Feststoffgemischen gerichtet, beispielsweise Haus- oder Gewerbemüllgemischen, bestehend aus Kunststoffen, die mit mineralischen Schwerstoffen wie Sanden oder mit anderen spezifisch schweren Verunreinigungen wie z. B. Metallen verunreinigt sind, in einer Trennflüssigkeit, deren Dichte vorzugsweise zwischen den Dichten der zu trennenden Feststoffe liegt, im Zentrifugalfeld der aus den Feststoffen und der Trennflüssigkeit gebildeten rotierenden Suspension in einer die Feststoffe unterschiedlicher Dichte trennenden Sortier-bzw. Trennzentrifuge.

Die naßmechanische Trennung von Feststoffen nach ihrer Dichte unter dem Einfluss von Zentrifugalkräften ist bereits bekannt.

So wird in der DE-A-29 00 666 ein Verfahren zur Trennung von Kunststoffabfällen beschrieben, bei dem die Trennung im rotierenden Suspensionsstrom eines Hydrozyklons erfolgt. Nachteilig bei der ausschließlichen Trennung nach diesem Verfahren ist die unbefriedigende Trennschärfe, was zu Feststoffverlusten führt, und auch die erforderliche nachzuschaltende Abtrennung der Trennflüssigkeit von den erhaltenen Feststofffraktions-Suspensionen.

Auch beim bekannten Verfahren zum Recycling zerkleinerter Kunststoffflaschen der WO-A-9222380 findet die Trennung (fest-fest) der verschiedenen Kunststoffe ausschließlich in mehreren Hydrozyklonen statt, denen Entwässerungszentrifugen (Trennung fest-flüssig) zwecks Entwässerung bzw. Trocknung der Kunststoffkomponenten nachgeschaltet sein können.

Die damit verbundenen Nachteile werden durch die in der DE-A-42 08 104 beschriebenen Trennzentrifuge, bei der die Trennung im erzeugten Zentrifugalfeld eines rotierenden Behälters erfolgt, weitgehend vermieden.

Bei diesem bekannten bewährten Verfahren zur Trennung von Kunststoffgemischen in einer Trennzentrifuge können in einigen Anwendungsfällen folgende Probleme auftreten:
a) Wenn das Aufgabematerial sehr große Anteile feinkörniger mineralischer Verunreinigungen (mineralische Schwerstoffe) enthält, findet ein erhöhter Verschleiß an Bauteilen der Trennzentrifuge statt.
b) Bei Anwendungen, bei denen schwere Kunststoffe in einer ersten Stufe von leichten Kunststoffen und in einer zweiten Stufe der schwere Kunststoff (nun als Schwimmgut) von noch schwereren mineralischen Verunreinigungen (z. B. metallische Litzen bei Kabelschrott) bei Trenndichten von über etwa 1,4 g/m³ getrennt werden müssen, ist diese zweite Stufe manchmal unter anderem wegen des hohen Salzverbrauchs nicht mehr wirtschaftlich.

Es ist Aufgabe der Erfindung, ein Verfahren und eine Vorrichtung zu schaffen, mit den bzw. mit der die Abtrennung von Feststoffen nach ihrer Dichte, vorzugsweise Kunststoffen aus Kunststoffgemischen unter weitgehender Vermeidung der vorstehend beschriebenen Nachteile bekannter Verfahren und Vorrichtungen weiter ausgebildet wird.

Die gestellte Aufgabe wird verfahrensmäßig mit den Maßnahmen des Kennzeichnungsteils des Anspruchs 1 und vorrichtungsmäßig mit den Merkmalen des Kennzeichnungsteils des Anspruchs 6 gelöst.

Vorteilhafte Ausgestaltungen der Erfindung werden in den Unteransprüchen genannt.

Durch die erfindungsgemäße Kombination eines Hydrozyklons mit einer Trennzentrifuge werden mit Vorteil aus beispielsweise einem Kunststoffgemisch, das als Verunreinigung mineralische Schwerstoffe oder andere spezifisch schwere Verunreinigungen wie z. B. Metalle enthält, die Schwerstoffe bereits vor dem Eintritt in die Trennzentrifuge im vorgeschalteten Hydrozyklon abgetrennt, so daß ein Verschleiß von Bauteilen der Trennzentrifuge durch diese Schwerstoffe nicht mehr stattfindet. Durch die direkte Hintereinanderschaltung von Hydrozyklon und Trennzentrifuge gemäß der Erfindung ist diese Abtrennung der mineralischen Schwerstoffe ohne Änderung der Dichte der Trennflüssigkeit - also mit nur einer Trennflüssigkeit - möglich.

Der Gegenstand der Erfindung wird im folgenden an zwei Beispielen näher erläutert.

Das vorzerkleinerte und mehr oder weniger vorgereinigte Kunststoffgemisch, beispielsweise durch Handsortierung, das noch schwere mineralische Anteile enthält, wird in einem Anmaischbehälter mit der Trennflüssigkeit - in diesem Beispiel Wasser - mit einer Dichte von 1 g/m³ mit Hilfe eines Rührers vermischt. Die erhaltene Suspension wird einem Hydrozyklon aufgegeben, der nach bekannten Methoden so dimensioniert ist, daß die mineralischen Schwerstoffe, deren Dichte etwa bei 2,3 g/m³ (bei Sand) oder höher (bei Metallen) liegen, an seinem Unterlauf ausgetragen werden und die Kunststoffmischung aus seinem Überlauf. Dieser Überlauf des Hydrozyklons wird der Trennzentrifuge aufgegeben, in der dann die Trennung des schweren und des leichten Kunststoffs in zwei Fraktionen unter Abtrennung der Trennflüssigkeit erfolgt.

### Beispiel 1: stark verschmutzte Folien

Stark verschmutzte Folien werden nach ihrer Zerkleinerung mit Wasser gemischt und enthaltene Schmutzstoffe (mineralische Schwerstoffe) im Hydrozyklon abgetrennt. Daran anschließend erfolgt bei einer Trenndichte von 1 g/m³ in der Trennzentrifuge die Trennung von PO-Folien (Dichte kleiner 1 g/m³) von anderen Folien, deren Dichte größer als 1 g/m³ beträgt, z. B. PVC. Da der Schmutz durch dieses Vorgehen weitgehend vor der Trennzentrifuge abgetrennt worden ist, ist der Verschleiß an Bauteilen der Trennzentrifuge minimal, was zu einer erheblichen Standzeiterhöhung der Trennzentrifuge führt.

### Beispiel 2: Recycling von Kunststoffflaschen

Die zerkleinerten Kunststoffflaschen, bestehend aus PET oder PVC und jeweils PO, werden mit Wasser gemischt und die erhaltene Suspension zunächst dem Hydrozyklon aufgegeben, in dem eine Abtrennung vorhandener Verunreinigungen (mineralische Schwerstoffe) erfolgt. Danach findet eine Trennung des verbleibenden Kunststoffgemisches in der Trennzentrifuge bei einer Trenndichte von 1 g/m³ in eine Leichtfraktion (Polyolefin-Anteile) und eine aus PVC oder PET bestehende reine Schwerfraktion statt. Eine Abtrennung der mineralischen Schwerstoffe aus dieser Kunststoff-Schwerfraktion ist somit nicht mehr erforderlich, wodurch die sonst benötigte zweite Trennstufe mit einer Trennflüssigkeit höherer Dichte eingespart wird.

Die bereits bekannten Verfahren zur Trennung von Kunststoffgemischen, in denen mehrere Sink-Schwimmstufen bzw. Hydrozyklonstufen hintereinandergeschaltet werden, benötigen stets mehr als zwei Trennstufen, da die Trennschärfe der einzelnen Stufen deutlich niedriger ist als die der Trennzentrifuge. Dies führt zu einem erhöhten Energie- und Wasserverbrauch, wobei die Verluste an wertvollem Kunststoff mit jeder Stufe zunehmen.

Eine vorteilhafte Ausgestaltung der Erfindung ist der Einbau des Hydrozyklons direkt in die Zuleitung zwischen dem Anmaischbehälter und der Trennzentrifuge. Hierdurch werden Energie- und Anlagenkosten eingespart.

Es ist aber auch mit Vorteil möglich, gemäß der Erfindung den Hydrozyklon in einem gesonderten Kreislauf aus dem Anmaischbehälter zu beschicken und den Hydrozyklonüberlauf gesamt oder teilweise in den Anmaischbehälter zurückzuführen. Hierdurch wird ein optimaler Hydrozyklonbetrieb bei wechselnden Aufgabequalitäten (Feststoffgehalt der Suspension) der zu trennenden Suspension möglich.

Weitere Vorteile, Einzelheiten und Merkmale der Erfindung werden nachfolgend anhand von Zeichnungsfiguren an Ausführungsbeispielen näher erläutert.

Es zeigt:
- Fig. 1:: ein Fließschema mit direkter Hintereinanderschaltung von Hydrozyklon und Trennzentrifuge;
- Fig. 2:: ein Fließschema mit teilweiser Rückführung des Hydrozyklonüberlaufs;
- Fig. 3:: ein Fließschema mit völliger Rückführung des Hydrozyklonüberlaufs.

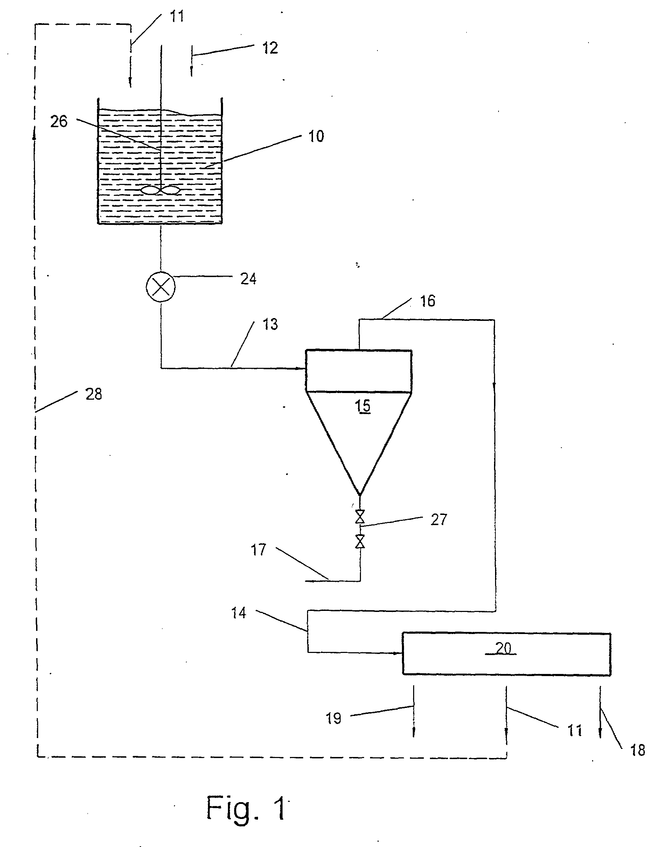

Das Fließschema der Fig. 1 zeigt einen Anmaischbehälter (10), in den die Trennflüssigkeit (11) und die zu trennenden Feststoffe (12), vorzugsweise Kunststoffgemische, eingeleitet werden und mittels eines Rührgerätes (26) zu einer Suspension vermischt werden.

Diese Suspension wird mittels einer Förderpumpe (24) über seine Zulaufvorrichtung (13) einem Hydrozyklon (15) aufgegeben, in dem eine Trennung der Suspension in ein Schwergut, das am Unterlauf (17) des Hydrozyklons über eine Schleuse (27) abgezogen wird und das die abzutrennenden mineralischen Schwerstoffe enthält, und in ein Leichtgut erfolgt, das am Überlauf (16) austritt und ein weitgehend von mineralischen Schwerstoffen befreites Kunststoffgemisch enthält.

Diese Überlaufsuspension gelangt nun direkt in die Zulaufvorrichtung (14) einer Trennzentrifuge (20), in der die abschließende Trennung des Kunststoffgemisches mit der Trenngrenze der Dichte der Trennflüssigkeit in ein Schwergut (18) und in ein Leichtgut (19) sowie in die Trennflüssigkeit (11) erfolgt. Die Trennflüssigkeit (11) kann von der Trennzentrifuge (20) über Leitung (28) zum Anmaischbehälter (10) rezirkuliert werden.

Das Fließschema gemäß der Fig. 1 zeichnet sich durch einen einfachen Aufbau aus, da der Hydrozyklon (15) direkt in die Förderleitung vom Anmaischbehälter (10) zur Trennzentrifuge (20) eingebaut ist.

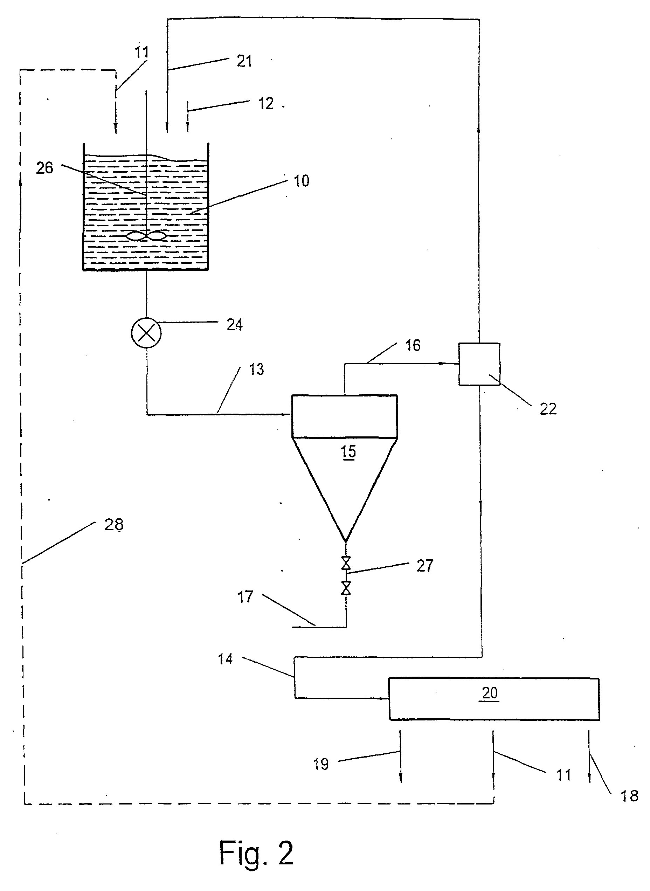

Beim Fließschema gemäß der Fig. 2 wird bei sonst gleicher Anordnung entsprechend der Fig. 1 eine über ein Regelorgan (22) dosierte Teilmenge der Hydrozyklonüberlaufsuspension zum Anmaischbehälter (10) zurückgeführt. Mit dieser Anordnung kann ein stabiler Betrieb der Trennzentrifuge auch bei größeren Durchsatzmengen des Hydrozyklons (15) aufrechterhalten werden.

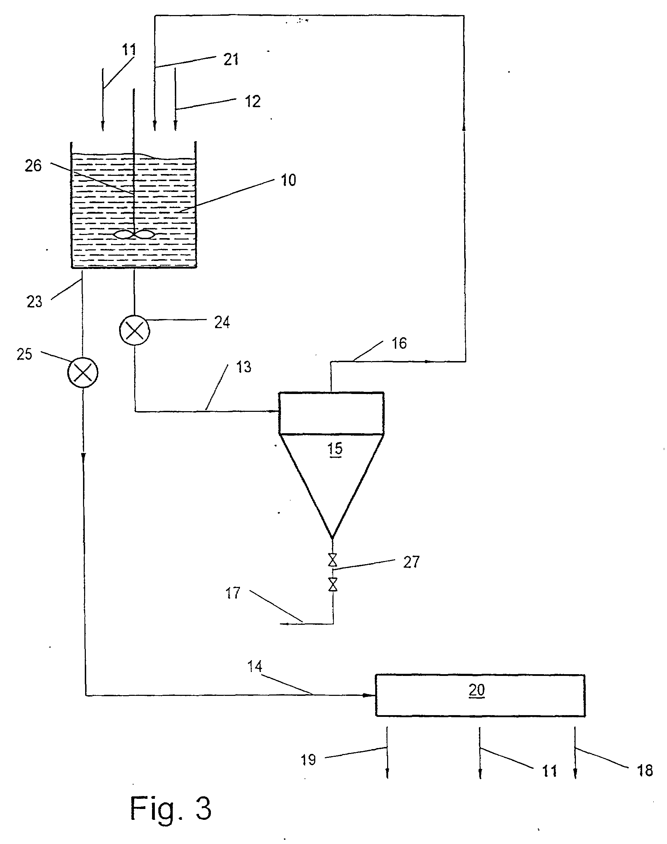

Bei stark schwankenden Durchsatzmengen des Hydrozyklons (15) hat sich die Schaltung gemäß dem Fließschema der Fig. 3 bewährt. Die gesamte Hydrozyklonüberlaufsuspension wird bei dieser Schaltung über den Zulauf (21) zum Anmaischbehälter (10) zurückgeführt. Die Speisung der Trennzentrifuge (20) geschieht in diesem Fall dann über Leitung (23) und über eine separate Förderpumpe (25) direkt aus dem Anmaischbehälter.

## Patentansprüche

1. Verfahren zur naßmechanischen Trennung von Feststoffen unterschiedlicher Dichte aus Feststoffgemischen, beispielsweise Haus- oder Gewerbemüllgemischen, bestehend aus Kunststoffen, die mit mineralischen Schwerstoffen wie Sanden oder mit anderen spezifisch schweren Verunreinigungen wie z. B. Metallen verunreinigt sind, in einer Trennflüssigkeit, deren Dichte vorzugsweise zwischen den Dichten der zu trennenden Feststoffe liegt, im Zentrifugalfeld der aus den Feststoffen und der Trennflüssigkeit gebildeten rotierenden Suspension in einer die Feststoffe unterschiedlicher Dichte trennenden Sortier- bzw. Trennzentrifuge, **dadurch gekennzeichnet, dass** zunächst wenigstens eine Teilmenge der in Suspension mit der Trennflüssigkeit befindlichen, die Verunreinigungen ausmachenden spezifisch schweren Feststoffe aus der Suspension in einem Hydrozyklon (15) abgetrennt und daran anschließend die restlichen Feststoffe in der Trennzentrifuge (20) aus der rotierenden Suspension abgetrennt werden.

2. Verfahren nach Anspruch 1, **dadurch gekennzeichnet, daß** der Hydrozyklon der Trennzentrifuge so vorgeschaltet ist, daß nur die Suspension des Hydrozyklonüberlaufs in die Trennzentrifuge geführt wird.

3. Verfahren nach Anspruch 2, **dadurch gekennzeichnet, daß** die Suspension des Hydrozyklonüberlaufs unmittelbar in die Trennzentrifuge geführt wird.

4. Verfahren nach Anspruch 1, **dadurch gekennzeichnet, daß** der Hydrozyklon in einem gesonderten Kreislauf aus einem Anmaischbehälter beschickt wird, in den die Suspension des Hydrozyklonüberlaufs zurückgeführt und aus dem gesondert die Suspension in die Zulaufvorrichtung der Trennzentrifuge entnommen wird.

5. Verfahren nach Anspruch 1, **dadurch gekennzeichnet, daß** nur eine Teilmenge der Suspension des Hydrozyklonüberlaufs in den Anmaischbehälter zurückgeführt wird und die übrige Teilmenge der Suspension des Hydrozyklonüberlaufs der Trennzentrifuge zugeführt wird.

6. Vorrichtung zur Durchführung des Verfahrens nach einem oder mehreren der vorgehenden Ansprüche, **gekennzeichnet durch**
- einen Anmaischbehälter (10), in dem die zu trennenden Feststoffe (12) mit der Trennflüssigkeit (11) gemischt werden;
- einen Hydrozyklon (15), dessen Zulaufvorrichtung (13) über eine Rohrleitung und eine Pumpe (24) mit dem Anmaischbehälter (10) verbunden ist;
- eine Trennzentrifuge (20), deren Zulaufvorrichtung (14) über eine Rohrleitung mit dem Überlauf (16) des Hydrozyklons verbunden ist.

7. Vorrichtung nach Anspruch 6, **dadurch gekennzeichnet, daß** die Zulaufvorrichtung (14) der Trennzentrifuge (20) über eine Rohrleitung mit dem Ablauf (23) des Anmaischbehälters (10) über eine Pumpe (25) verbunden ist und der Überlauf (16) des Hydrozyklons (15) über eine Rohrleitung mit dem Anmaischbehälter (10) verbunden ist.

8. Vorrichtung nach Anspruch 6, **dadurch gekennzeichnet, daß** der Überlauf (16) des Hydrozyklons (15) mit der Zulaufvorrichtung (21) des Anmaischbehälters (10) und mit der Zulaufvorrichtung (14) der Trennzentrifuge (20) über Rohrleitungen mit einem Regelorgan (22) verbunden ist.

9. Vorrichtung nach einen der Ansprüche 6 bis 8, **dadurch gekennzeichnet, daß** der Hydrozyklon (15) ein Flachbodenhydrozyklon ist.

## Claims

1. A process for the wet mechanical separation of solid materials of differing densities from solid mixtures, for instance household or trade waste, comprising plastics materials, which are contaminated with heavy mineral materials such as sand or with other specific contaminants such as for instance metals, in a separating fluid, whose density is preferably between the densities of the solid materials to be separated, in the centrifugal field of the rotating suspension formed from the solid materials and the separating fluid in a sorter or separating centrifuge dividing the solids of differing densities **characterised in that** firstly at least a partial quantity of the specific heavy solid materials in suspension with the separating fluid, constituting the contaminants, are separated out of the suspension in a hydrocyclone (15) and following this the remaining solid materials are separated in the separating centrifuge (20) from the rotating suspension.

2. A process according to Claim 1, **characterised in that** the hydrocyclone is coupled before the separating centrifuge, such that only the suspension from the hydrocyclone over-flow is taken into the separating centrifuge.

3. A process according to Claim 2, **characterised in that** the suspension from the hydrocyclone over-flow is taken immediately into the separating centrifuge.

4. A process according to Claim 1, **characterised in that** the hydrocyclone is charged in a separate circulation from a mixing container, into which the suspension of the hydrocyclone over-flow is taken back and from which the suspension is extracted into the feed arrangement of the separating centrifuge.

5. A process according to Claim 1, **characterised in that** only a partial quantity of the suspension in the hydrocyclone over-flow is taken back into the mixing container and the remaining part quantity of the suspension of the hydrocyclone over-flow is fed into the separating centrifuge.

6. An arrangement for performing the process according to one or more of the foregoing claims **characterised in**
- a mixing container (10) in which the solid materials (12) are mixed with the separating fluid;
- a hydrocyclone (15) whose in-feed arrangement (13) is connected with a pipe and a pump (24) to the mixing container (10);
- a separating centrifuge (20) whose in-feed arrangement (14) is connected via a pipe with the over-flow (16) of the hydrocyclone.

7. A process according to Claim 6, **characterised in that** the in-feed arrangement (14) of the separating centrifuge (20) is connected via a pipe to the outflow (23) of the mixing container (10) via a pump (25) and the over-flow (16) of the hydrocyclone (15) is connected via a pipe to the mixing container (10).

8. A process according to Claim 6, **characterised in that** the over-flow (16) of the hydrocyclone (15) is connected to the in-feed arrangement (21) of the mixing container (10) and to the in-feed arrangement (14) of the separating centrifuge (20) via pipes with a regulating device (22).

9. A process according to one of the claims 6 to 8, **characterised in that** the hydrocyclone (15) is a flat base hydrocyclone.

## Revendications

1. Procédé de séparation mécanique par voie humide de matières solides ayant des densités différentes, à partir de mélanges de matières solides, par exemple des mélanges d'ordures ménagères et industrielles, comprenant des matières plastiques polluées par des matières lourdes minérales telles que du sable, ou par d'autres impuretés spécifiques lourdes, comme par exemple des métaux, dans un liquide séparateur dont la densité est de préférence comprise entre celle des matières solides à séparer, dans un champ de forces centrifuges de la suspension contenant les matières solides et le liquide séparateur, en rotation dans une centrifugeuse de classement et de séparation qui sépare les matières solides de densités différentes,
**caractérisé en ce que**
tout d'abord on sépare au moins une fraction des matières solides spécifiques lourdes, constituant les impuretés contenues dans la suspension avec le liquide séparateur, pour les éliminer de la suspension dans un hydrocyclone (15), et ensuite on sépare les matières solides résiduelles dans la centrifugeuse (20) pour les éliminer de la suspension en rotation.

2. Procédé selon la revendication 1,
**caractérisé en ce que**
l'hydrocyclone est monté en amont de la centrifugeuse pour que seulement la suspension du débordement de l'hydrocyclone arrive dans la centrifugeuse.

3. Procédé selon la revendication 2,
**caractérisé en ce que**
la suspension du débordement de l'hydrocyclone est conduite directement dans la centrifugeuse.

4. Procédé selon la revendication 1,
**caractérisé en ce que**
l'hydrocyclone est alimenté par un circuit particulier à partir d'un réservoir mélangeur, dans lequel la suspension du débordement de l'hydrocyclone est renvoyée, et à partir duquel la suspension est envoyée séparément dans le dispositif d'alimentation de la centrifugeuse.

5. Procédé selon la revendication 1,
**caractérisé en ce que**
seulement une fraction de la suspension du débordement de l'hydrocyclone est renvoyée dans le réservoir mélangeur et la partie restante de la suspension du débordement de l'hydrocyclone est envoyée dans la centrifugeuse.

6. Dispositif pour la mise en oeuvre du procédé selon l'une quelconque des revendications précédentes,
**caractérisé par**
- un réservoir mélangeur (10) dans lequel on mélange les matières solides à séparer (12) et le liquide séparateur (11),
- un hydrocyclone (15) dont le dispositif d'alimentation (13) est relié par une conduite et une pompe (24) au réservoir mélangeur (10),
- une centrifugeuse (20) dont le dispositif d'alimentation (14) est relié par une conduite de débordement (16) de l'hydrocyclone.

7. Dispositif selon la revendication 6,
**caractérisé en ce que**
le dispositif d'alimentation (14) de la centrifugeuse (20) est relié par une conduite à la sortie (23) du réservoir mélangeur (10) par une pompe (25) et le débordement (16) de l'hydrocyclone (15) est relié au réservoir mélangeur (10) par une conduite.

8. Dispositif selon la revendication 6,
**caractérisé en ce que**
le débordement (16) de l'hydrocyclone (15) est relié au dispositif d'alimentation (21) du réservoir mélangeur (10) et au dispositif d'alimentation (14) de la centrifugeuse (20) par des conduites munies d'un organe de régulation (22).

9. Dispositif selon l'une quelconque des revendications 6 à 8,
**caractérisé en ce que**
l'hydrocyclone (15) est un hydrocyclone à fond plat.
